# EUROPEAN PATENT SPECIFICATION

(11) **EP 3 209 141 B1**
(45) Date of publication and mention of the grant of the patent: **27.06.2018**
(21) Application number: 15778336.6
(22) Date of filing: 12.10.2015
(51) Int. Cl.: A23J 1/14, A23P 30/40, A23L 29/212, A23L 9/10

(54) **LENTIL-DERIVED FOAMING AGENT AND FOAMABLE COMPOSITIONS CONTAINING SUCH FOAMING AGENT**
AUS LINSEN GEWONNENES SCHÄUMUNGSMITTEL UND SCHÄUMBARE ZUSAMMENSETZUNGEN DIE DIESES ENTHALTEN
AGENT MOUSSANT DÉRIVÉ DE LENTILLE ET COMPOSITIONS MOUSSANTES CONTENANT UN TEL AGENT MOUSSANT

(30) Priority: 23.10.2014 EP 14190003
(43) Date of publication of application: 30.08.2017
(73) Proprietor: Unilever NV, 3013 AL Rotterdam (NL); Unilever PLC, London, Greater London EC4Y 0DY (GB)
(72) Inventor: BIALEK, Jadwiga, Malgorzata, 3133 AT Vlaardingen (NL); VAN DER HIJDEN, Hendrikus, Theodorus, W, M, 3133 AT Vlaardingen (NL); KHALLOUFI, Seddik, 3133 AT Vlaardingen (NL); NIEMAN, Gerrit, 3133 AT Vlaardingen (NL); VREEKER, Robert, 3133 AT Vlaardingen (NL)
(74) Representative: van Benthum, Wilhelmus A. J.
(86) International application number: PCT/EP2015/073534
(87) International publication number: WO 2016/062567

(56) References cited:
- EP-A1- 1 133 932
- DD-A1- 214 527
- SWANSON B G: "Pea and Lentil Protein extraction and functionality", JOURNAL OF THE AMERICAN OIL CHEMISTS' SOCIETY. (JAOCS), SPRINGER, DE, vol. 67, no. 5, 1 May 1990 (1990-05-01), pages 276-280, XP003025920, ISSN: 0003-021X, DOI: 10.1007/BF02539676 cited in the application
- LEVENT YURDAER AYDEMIR ET AL: "Potential of Turkish Kabuli type chickpea and green and red lentil cultivars as source of soy and animal origin functional protein alternatives", LWT - FOOD SCIENCE AND TECHNOLOGY, vol. 50, no. 2, 1 March 2013 (2013-03-01), pages 686-694, XP055180800, ISSN: 0023-6438, DOI: 10.1016/j.lwt.2012.07.023 cited in the application
- KAUR M ET AL: "Preparation and characterization of protein isolates from different lentil (Lens culinaris) cultivars", JOURNAL OF FOOD SCIENCE AND TECHNOLOGY, SPRINGER (INDIA) PRIVATE LTD, INDIA, vol. 44, no. 3, 1 May 2007 (2007-05-01), pages 327-329, XP009183564, ISSN: 0022-1155 cited in the application
- Mashair . ET AL: "Solubility as Influenced by pH and NaCl Concentaration and Functional Properties of Lentil Proteins Isolate", Pakistan Journal of Nutrition, 1 June 2006 (2006-06-01), pages 589-593, XP055180832, DOI: 10.3923/pjn.2006.589.593 Retrieved from the Internet: URL:http://doaj.org/search?source=%7B%22qu ery%22%3A%7B%22bool%22%3A%7B%22must%22%3A% 5B%7B%22term%22%3A%7B%22id%22%3A%2264170b5 a53514d0ca312924ceeb2b0d0%22%7D%7D%5D%7D%7 D%7D [retrieved on 2015-04-07] cited in the application
- JOSHI M ET AL: "Physicochemical and functional properties of lentil protein isolates prepared by different drying methods", FOOD CHEMISTRY, ELSEVIER LTD, NL, vol. 129, no. 4, 27 May 2011 (2011-05-27), pages 1513-1522, XP028262732, ISSN: 0308-8146, DOI: 10.1016/J.FOODCHEM.2011.05.131 [retrieved on 2011-06-02]

## Description

### TECHNICAL FIELD OF THE INVENTION

The present invention relates to a lentil derived foaming agent. The invention further provides a process of preparing such a foaming agent from a lentil starting material.

Also provided is an aqueous foamable composition containing the aforementioned foaming agent and a dry composition that can be reconstituted with water to produce such an aqueous foamable composition.

### BACKGROUND OF THE INVENTION

Foams, such as produced by egg whites, are an important ingredient in many food products, such as cakes, angel food, meringues, mousses, whipped toppings, confections, sauces and the like. These foams are essentially colloidal systems in which tiny air bubbles are dispersed in an aqueous continuous phase.

Besides egg white, also whey proteins and some vegetable proteins are capable of promoting the formation of aqueous foams.

Pungor et al. (Investigation of the foaming properties of some food protein preparations, Periodica Polytechnica Ser. Chem. Eng. VOL. 36, NO. 2, PP. 127-135 {1992}) investigated the foaming properties of 10 different protein isolates and protein preparations (wheat germ-, barley germ-, maize germ protein, lentil-, pea-, soy protein, ovalbumin, bovine serum albumin, casein and lysozyme) using volumetric and conductometric methods. According to the volumetric method casein and bovine serum albumin had the best foaming power. Good foaming power was observed with maize germ-, soy-, pea-, barley germ proteins and ovalbumin. The foam forming ability of wheat germ protein and lysozyme was the lowest. Maize germ-, soy and lentil protein showed the best foam stability and barley germ protein the lowest one according to conductometric results. The correlation between the foam stability data obtained by the two methods was found to be very poor.
D'Agostina et al. (Optimization of a Pilot-Scale Process for Producing Lupin Protein Isolates with Valuable Technological Properties and Minimum Thermal Damage, J Agric Food Chem. 2006 Jan 11;54(1):92-8) describe a pilot process for obtaining protein isolates from white lupin seeds. Lupin flakes were deoiled using either hexane or supercritical carbon dioxide and then used as an input material for protein extraction. Extraction from deoiled flakes was performed under mild conditions using a two stage process. In the first stage, the deoiled flakes were mashed in cold water under acid conditions (pH 4.5) to separate the low molecular weight compounds, such as the oligosaccharides and the off-flavors (e.g., alkaloids) from the basic proteins. The clarified acid extract was concentrated by ultra-/diafiltration to give a lupin protein isolate. This protein isolate was found to have a high capability of foam formation and stabilization.

Toews et al. (Physicochemical and functional properties of protein concentrates from pulses, Food Research International 52 (2013) 445-451) investigated the physicochemical and functional properties of protein concentrates from peas, lentils, navy beans, chickpeas, and defatted chickpeas. Protein concentrates were prepared using a laboratory wet milling procedure. Functional properties of the chickpea protein concentrates, including water hydration capacity, foaming capacity, and emulsion capacity, were improved significantly after a defatting step was added prior to the fractionation process. Navy bean protein concentrate had the largest foaming capacity, whilst chickpea protein concentrates had the smallest. Protein concentrates from lentils had the most stable foams after 120 min, whilst those from chickpeas had the least stable foams. Protein content of the protein concentrates was positively correlated, whilst the fat content was negatively correlated with foaming capacity.

East German patent application DD 214 527 describes a preparation of defatted protein isolates from legumes such as broad beans, beans, peas, lentils and lupins. The protein isolates are produced by extracting crushed legumes with aqueous electrolyte solutions after the legumes have been pre-treated by steaming or boiling at 100-120°C for 1-10 minutes, followed by precipitation of the proteins from the extract at low pH and extraction of the precipitated protein with a hydrophobic organic solvent. The protein isolates so obtained are said to have functional properties that are useful for specific applications in the food industry, especially in the preparation of foams and gels.

Swanson et al. (Pea and Lentil Protein Extraction and Functionality, JAOCS 67(5) (1990) 276-280) review various aspects of processes for extraction of protein from lentils and peas. They disclose that such protein extracts may contribute to foamability.

European patent application EP 1 133 932 relates to a process for making a culinary foamer in powder form. The foamer is prepared by foaming a concentrated solution to a certain overrun followed by drying and comminuting. The foamer may contain a foaming agent, preferably a foamable protein, in particular milk protein.

Aydemir et al. (Potential of Turkish Kabul type chickpea and green and red lentil cultivars as source of soy and animal origin functional protein alternatives, LWT - Food Science and Technology 50 (2013) 686-694) describe the extraction of proteins from *inter alia* Turkish cultivars of chick peas, lentils and of soybeans and disclose the foaming capacities and foam stabilities of solutions of the extracted proteins.

Kaur et al. (Preparation and characterization of protein isolates from different lentil (Lens culinaris) cultivars, J Food Sci Technol 44(3) (2007), 327-329) describes the foaming properties of proteins extracted from certain lentil cultivars. The preparation of the lentil protein isolates involves defatting of lentil flour by hexane extraction, followed by aqueous extraction of protein from the flour.

Suliman et al. (Solubility as Influenced by pH and NaCl Concentration and Functional Properties of Lentil Proteins Isolate, Pakistan Journal of Nutrition 5(6) (2006), 589-593) discusses the foaming properties of protein isolates of Sudanese lentil cultivars.

A drawback associated with the use of vegetable protein isolates as foaming agents resides in the considerable costs associated with the production of these isolates and the waste streams associated with this production.

### SUMMARY OF THE INVENTION

The inventors have discovered that an excellent foaming agent can be obtained from lentils by a very simple process. This foaming agent may be obtained from e.g. lentil flour by removing most of the triglycerides contained therein, e.g. by solvent extraction. The defatted foaming agent so obtained largely consists of proteins (globulin, albumin, glutelin and prolamin) and starch, and can form aqueous foams with high foam overrun and considerable foam stability.

Although the inventors do not wish to be bound by theory, it is believed that the excellent foaming properties of the present foaming agent are associated with the lentil albumin and starch contained therein, as well as the very low triglyceride content.

One aspect of the invention relates to an aqueousfood product that is capable of forming a foam and that consists of:
- 0.001-0.8 wt.% of lentil albumin;
- 0.01-5 wt.% of lentil starch;
- 0-0.02 wt.% of triglycerides;
- 80-99 wt.% water; and
- 2-19 wt.% of other ingredients;
wherein the food product contains at least 30% by weight of dry matter of food ingredients selected from monosaccharides, disaccharides, oligosaccharides, non-lentil polysaccharides, non-lentil proteinaceous matter, minerals and combinations thereof.

The invention also pertains to a dry composition that can be reconstituted with water to produce the aforementioned foamable aqueous composition; wherein the dry composition consists of:
- 0.1-4 wt.% of lentil albumin;
- 1-40 wt.% of lentil starch;
- 0-10 wt.% water; and
- 40-95 wt.% of other components;
and wherein the dry composition contains less than 4%, preferably less than 2% and most preferably less than 1% triglycerides by weight of the lentil albumin.

Another aspect of the invention relates to a process of preparing a foamable aqueous food composition according to the invention, said process comprising combining a lentil derived component with one or more other ingredients representing at least 50 wt.% of the dry matter contained in the foamable composition, said lentil derived component consisting of:
- 3-20 wt.% lentil albumin;
- 30-70 wt.% lentil starch;
- 0-0.2 wt.% triglycerides; and
- 0-40 wt.% of other ingredients derived from lentil.

### DETAILED DESCRIPTION OF THE INVENTION

Accordingly, a first aspect of the present invention relates to a foamable aqueous food product consisting of:
- 0.001-0.8 wt.% of lentil albumin;
- 0.01-5 wt.% of lentil starch;
- 0-0.02 wt.% of triglycerides;
- 80-99 wt.% water; and
- 2-19 wt.% of other ingredients;
wherein the food product contains at least 30% by weight of dry matter of food ingredients selected from monosaccharides, disaccharides, oligosaccharides, non-lentil polysaccharides, non-lentil proteinaceous matter, minerals and combinations thereof.
The term "protein" as used herein refers to a linear polypeptide comprising at least 10 amino acid residues. Preferably, said protein contains more than 20 amino acid residues. Typically, the protein contains not more than 35,000 amino acid residues.

The term "albumin" as used herein refers to a protein that is soluble in water and in moderately concentrated salt solutions and that experiences heat coagulation. Reference is made to the Osborne protein classification system (T.B. Osborne, The Vegetable Proteins, Monographs in Biochemistry (London; Longmans, Green and Co., 1924).

The term "globulin" as used herein refers to a protein that is insoluble in water, but soluble in saline solutions.

The term "starch" as used herein, unless indicated otherwise, refers to native, non-modified, starch. Starch consists of two types of molecules: the linear and helical amylose and the branched amylopectin.

The term "gelatinized starch" as used herein refers to starch that has undergone gelatinization. Starch gelatinization is a process that breaks down the intermolecular bonds of starch molecules in the presence of water and heat, allowing the hydrogen bonding sites to engage more water. This irreversibly dissolves the starch granule. Penetration of water increases randomness in the general starch granule structure and decreases the number and size of crystalline regions. Under the microscope in polarized light starch loses its birefringence and its extinction cross during gelatinization. Some types of unmodified native starches start swelling at 55 °C, other types at 85 °C. The gelatinization temperature depends on the degree of cross-linking of the amylopectin and on the ratio of amylase to amylopectin.

The term "triglycerides" as used herein refers to an ester of glycerol and three fatty acids.

The term "fatty acid" as used herein refers to a carboxylic acid with a long aliphatic chain of 4 to 29 carbon atoms, which chain can be saturated or unsaturated.

The terminology "aerated aqueous composition" as used herein refers to a foamable aqueous composition that contains a dispersed gaseous phase, e.g. dispersed air bubbles, and that has an overrun of at least 10%.

The term "overrun" as used herein refers to a parameter that is indicative of the amount of dispersed gas that is contained in an aerated composition and that is calculated on the basis of the following equation: Overrun = (density of unaerated composition - density of aerated composition) x 100 / density of aerated composition)

The concentration of lentil albumin in the present aqueous composition typically lies in the range of 0.01-0.6 wt.%, more preferably of 0.02-0.5 wt.% and most preferably of 0.04-0.35 wt.%.

The lentil starch content of the aqueous composition preferably lies in the range of 0.04-5.0 wt.%. More preferably, the lentil starch content is in the range of 0.08-4.0 wt.%, most preferably of 0.33-3.0 wt.%.

Triglycerides are typically contained in the aqueous composition in a concentration of not more than 0.01 wt.%, more preferably of not more than 0.006 wt.% and most preferably of not more than 0.001 wt.%.

The other ingredients that are present in the aqueous composition include other components than lentil albumin and starch. These other ingredients may also be derived from lentil. An example of such other lentil-derived ingredients are lentil proteins other than albumin, notably globulin, glutelin and prolamin. According to a particularly preferred embodiment, the aqueous composition contains at least 0.03 wt.%, more preferably at least 0.06 wt.% and most preferably 0.12-1.0 wt.% of non-albumin lentil proteins selected from globulin, glutelin, prolamin and combinations thereof.

In accordance with another preferred embodiment, the aqueous composition contains lentil albumin and the aforementioned non-albumin lentil proteins in a weight ratio that lies in the range of 1:1 to 1:6, more preferably in the range of 1:2 to 1:5, most preferably in the range of 1:3 to 1:5.

Lentil globulins are composed of two major proteins - 11S legumin-like and 7S vicilin-like proteins. Typically, these legumin-like proteins and vicilin-like proteins are present in the aqueous composition in a weight ratio that lies in the range of 6:1 to 14:1.

Dietary fibre is another lentil component that is typically contained in the aqueous composition. Typically, the amount of dietary fibre contained in the composition is at least 30% by weight of lentil albumin, more preferably at least 60% by weight of lentil albumin and most preferably at least 100% by weight of lentil albumin.

The other ingredients, i.e. ingredients other than lentil albumin, starch, triglycerides and water are contained in the foamable aqueous composition in a concentration of at least 2 wt.%, preferably of at least 2.5 wt.% and more preferably of at least 3 wt.%. Examples of these other ingredients that may suitably be incorporated in the aqueous composition include emulsifiers, sugars, oligo- and polysaccharides, flavouring, colouring, vitamins, minerals and proteins from non-lentil sources. These ingredients may suitably be introduced into the aqueous composition in the form of e.g. herbs, spices, vegetable or meat extracts etc.

According to a preferred embodiment, the aforementioned other ingredients represent at least 50 wt.%, more preferably at least 60 wt.% and most preferably at least 65 wt.% of the dry matter that is contained in the foamable aqueous composition.

Since triglycerides adversely effect the foaming properties of the present aqueous composition it is preferred that the aqueous composition contains less than 4%, preferably less than 2% and most preferably less than 1 % triglycerides by weight of the lentil albumin. Lentil pulses typically contain 8% of triglycerides by weight of lentil albumin.

Unlike triglycerides phospholipids do not, or hardly adversely affect the foaming capacity of the present composition. Lentils naturally contain a significant amount of phospholipids. According to a preferred embodiment, the foamable aqueous composition contains 0.0002 to 0.1 wt.% of phospholipids. More preferably, the composition contains 0.001-0.07 wt.%, and most preferably 0.002-0.05 wt.% of phospholipids.

Expressed differently, the aqueous composition contains 2-40%, preferably 4-35% and most preferably less than 8-32% of phospholipids by weight of the lentil albumin. Lentil pulses typically contain at least 30% of phospholipids by weight of lentil albumin.

Triglycerides and phospholipids are typically contained in the foamable aqueous composition in a weight ratio of less than 1:5, more preferably of less than 1:10 and most preferably of less than 1:20.

Lentil albumin and starch are typically present in the foamable aqueous composition in a weight ratio that lies within the range of 1:30 to 1:1. More preferably said weight ratio lies in the range of 1:20 to 1:2, most preferably in the range of 1:12 to 1:5. Lentil pulses typically contain lentil albumin and starch in a weight ratio of approximately 1:8.

In a preferred embodiment of the invention the aqueous composition has a pH in the range of 4.0 to 8.0, more preferably in the range of 4.2 to 7.0, most preferably in the range of 4.5 to 6.5.

The inventors have found that the foam that is formed after aerating the aqueous composition of the present invention is particularly stable if the composition contains a significant amount of gelatinized starch. Accordingly, in accordance with a preferred embodiment, the aqueous composition contains at least 80 wt.%, more preferably at least 85 wt.% and most preferably at least 90 wt.% of gelatinized starch.

The aqueous composition of the invention further offers the advantage that it exhibits good foaming capacity if the composition contains significant quantities of salt. Thus, in a preferred embodiment, the aqueous composition contains 0.1-2 wt.%, more preferably 0.2-1.5 wt.% and most preferably 0.3-1.0 wt.% of salt selected from NaCl, KCl and combinations thereof. The total content of NaCl and KCl in the aqueous composition is determined by the total combined amount of K⁺ and Na⁺ that is present in the composition or the total amount of Cl⁻ contained therein, whichever is the lowest.

A further beneficial property of the aqueous composition lies in the fact that foaming capacity is retained in the presence of considerable quantities of sugar. Consequently, in another preferred embodiment, the aqueous composition contains 1-20 wt.%, more preferably 2-15 wt.% and most preferably 5-10 wt.% of sugars selected from monosaccharides, disaccharides and combinations thereof.

Examples of foamable aqueous compositions according to the present invention include food products, beverages, cosmetic products and cleaning liquids. Most preferably, the aqueous composition is a food product. Typically, such a food product contains at least 30%, more preferably at least 50% and most preferably at least 70% by weight of dry matter of food ingredients selected from monosaccharides, disaccharides, oligosaccharides, non-lentil polysaccharides, non-lentil proteinaceous (including peptides and amino acids), minerals and combinations thereof.

The aqueous composition of the present invention offers the advantage that it has a high foaming capacity. Typically, the aqueous composition can be aerated to an overrun of at least 10% by introducing 150 gram of the composition into the mixing bowl of a Kenwood food mixer (Titanium Timer Chef KM030, Kenwood UK) equipped with a 5 wire whisk attachment and stirring at maximum speed for 10 minutes. The whipped composition is then immediately transferred to a graduated 1L polypropylene plastic beaker to determine overrun.

The aqueous composition of the present invention can be a savoury composition or a sweet composition.

Savoury compositions, such as soups and sauces typically require only a relatively small level of aeration. This can be achieved by employing a relatively small level of lentil albumin. Typically, the savoury aqueous composition contains 0.001-0.1 wt.% lentil albumin. More preferably, the savoury aqueous composition contains 0.002-0.05 wt.% lentil albumin, most preferably 0.0025-0.025 wt.% lentil albumin.

In case the aqueous composition is a savoury composition containing a significant amount of salt as indicated herein before, the savoury aqueous composition can preferably be aerated to an overrun of at least 15%, more preferably to an overrun of at least 18% and most preferably to an overrun of at least 20% under the conditions specified. Examples of foamable savoury compositions according to the present invention include soups and sauces.

In contrast to savoury compositions, sweet compositions such as mousses and toppings, preferably are aerated to a high level. To achieve this it is preferred to employ a relatively high level of lentil albumin and starch. Typically, the sweet aqueous composition contains 0.05-0.6 wt.% lentil albumin. More preferably, the sweet aqueous composition contains 0.1-0.5 wt.% lentil albumin, most preferably 0.2-0.4 wt.% lentil albumin.

In case the aqueous composition is a sweet composition containing a significant amount of sugars as indicated herein before, the sweet aqueous composition can preferably be aerated to an overrun of at least 50%, more preferably to an overrun of at least 100% and most preferably to an overrun of at least 200% under the conditions specified. Examples of foamable sweet composition according to the invention include toppings, mousses and fillings.

Triglycerides have a very pronounced adverse effect of the foaming capacity of the aqueous composition of the present invention. After admixture of 1 wt.% sunflower oil, the aqueous composition typically yields an overrun that is at least 2 time, more preferably at least 3 times and most preferably at least 5 times lower than the overrun that is obtained if no sunflower is admixed, wherein the overrun is determined using the procedure described herein before.

The present invention also provides an aerated aqueous composition having the composition features described herein before, said aqueous composition having an overrun of at least 10%.

In accordance with one embodiment, the aqueous composition is a savoury composition containing a significant amount of salt and a relatively small amount of lentil albumin as defined herein before, the savoury aqueous composition having an overrun of at least 15%, more preferably of at least 18% and most preferably of at least 20% under the conditions specified.

In accordance with another embodiment, the aqueous composition is a sweet composition containing a significant amount of sugars and a relatively high amount of lentil albumin as defined herein before, the sweet aqueous composition having an overrun of at least 50%, more preferably of at least 100% and most preferably of at least 200% under the conditions specified.

Another aspect of the present invention relates to a process of preparing a foamable composition, said process comprising combining a lentil derived component with one or more other ingredients representing at least 50 wt.% of the dry matter contained in the foamable composition, said lentil derived component consisting of:
- 3-20 wt.%, preferably 4-7 wt.% lentil albumin;
- 30-70 wt.%, preferably 40-60 wt.% lentil starch;
- 0-0.2 wt.%, preferably 0-0.1 wt.% triglycerides; and
- 0-60 wt.%, preferably 0-55 wt.% of other ingredients derived from lentil.

The one or more ingredients that are combined with the lentil derived components represent at least 50 wt.%, preferably at least 60 wt.% and more preferably at least 65 wt.% of the dry matter contained in the foamable composition. Examples of the one or more ingredients that may employed in the present process include water, monosaccharides, disaccharides, oligosaccharides, polysaccharides, proteinaceous matter (proteins, peptides and/or amino acids), edible salts, acids, flavouring, colouring, vitamins, minerals, plant extracts, meat extracts, dairy products, spices and herbs.

The lentil derived component employed in the present process may suitably be obtained by extracting lentil flour with an organic solvent, preferably a C₅₋₈ alkane or a mixture thereof. Most preferably, the lentil derived component is obtained by extracting lentil flour with hexane or heptanes.

The foamable composition obtained in the present process can be an aqueous composition that can be converted directly into a foam. Alternatively, the foamable composition obtained in the process needs to be reconstituted with water or another aqueous liquid (e.g. fat-free milk) to produce an aqueous composition that can be converted into a foam.

According to another preferred embodiment, the present preparation process yields a 'wet' foamable composition in the form of a foamable aqueous composition as defined herein before.

The lentil derived composition that is employed in the present process typically contains lentil albumin and starch in a weight ratio of 1:20 to 1:3. More preferably, the latter weight ratio lies within the range of 1:12 to 1:5, most preferably in the range of 1:10 to 1:4.

Triglycerides and lentil albumin are typically present in the lentil derived composition in a weight ratio of less than 5:100, more preferably of less than 3:100 and most preferably of less than 1:100.

The lentil derived composition typically comprises phospholipids and lentil albumin in a weight ratio in the range of 1:30 to 1:2, more preferably in the range of 1:20 to 1:3, most preferably in the range of 1:10 to 1:4.

Triglycerides and phospholipids are typically contained in the lentil derived composition in a weight ratio of less than 1:5, more preferably of less than 1:10 and most preferably of less than 1:20.

A further aspect of the invention relates to a dry composition that can be reconstituted with water to a foamable aqueous composition as defined herein before. Preferably, said dry composition is obtainable, more preferably it is obtained by a process as defined herein before.
The dry composition of the present invention consists of:
- 0.1-4 wt.% of lentil albumin;
- 1-40 wt.% of lentil starch;
- 0-10 wt.% water; and
- 40-95 wt.% of other components;
wherein the dry composition contains less than 4%, preferably less than 2% and most preferably less than 1% triglycerides by weight of the lentil albumin.

The aforementioned dry composition preferably is a rehydratable powder.

The aforementioned dry composition typically comprises phospholipids and lentil albumin in a weight ratio in the range of 1:30 to 1:2, more preferably in the range of 1:20 to 1:3, most preferably in the range of 1:10 to 1:4.

Triglycerides and phospholipids are typically contained in the dry composition in a weight ratio of less than 1:5, more preferably of less than 1:10 and most preferably of less than 1:20.

In accordance with one advantageous embodiment, the dry composition is a sweet composition that consists of:
- 0.5-4 wt.% of lentil albumin;
- 5-40 wt.% of lentil starch;
- 15-80 wt.% of sweetener;
- 0-90 wt.%, preferably 10-50 wt.% of other components;

Examples of sweeteners that may be employed in include sugars, sugar alcohols and artificial sweeteners. Most preferably, the sweetener is selected from sucrose, glucose, fructose and combinations thereof.

Examples of sweet dry compositions according to the present invention include instant desserts, instant whipping creams, instant toppings and instant fillings.

In accordance with another advantageous embodiment, the dry composition is a savoury composition that consists of:
- 0.1-1 wt.% of lentil albumin;
- 1-10 wt.% of lentil starch;
- 5-35 wt.% of salt selected from sodium chloride, potassium chloride and combinations thereof; and
- 50-95 wt.%, preferably 60-90 wt.% of other components;

Examples of savoury dry compositions according to the present invention include instant sauces, instant soups, instant cheese foams.

The invention also relates to use of a lentil-derived component as a foaming agent in an aqueous food product, wherein the lentil derived component consists of:
- 3-20 wt.% lentil albumin;
- 30-70 wt.% lentil starch;
- 0-0.2 wt.% triglycerides; and
- 0-60 wt.% of other ingredients.
In this use, the lentil-derived component preferably is defatted lentil flour.

The invention is further illustrated by the following non-limiting examples.

### EXAMPLES

### Example 1

The effects of heat treatment and/or hexane extraction on the foaming properties of lentil flour were investigated.

Red lentil flour (supplied by AS Besin, Turkey) was divided into 5 portions 1 to 5. Four of these portions were extracted with hexane and/or heat treated as shown in Table 1.

**Table 1**

| Sample | Treatment(s) |
|---|---|
| 1 | No treatment |
| 2 | Extraction with hexane |
| 3 | Heat treatment |
| 4 | Heat treatment followed by extraction with hexane |
| 5 | Extraction with hexane, followed by heat treatment |

### Heat treatment

- Samples 3 & 5: lentil flour was dispersed in Millipore water (concentration: 5 wt%). The dispersion was heated from 20 to 90 °C, kept at 90 °C for 20 minutes and then cooled to 20 °C.
- Sample 4: lentil flour was dispersed in demineralized water (concentration: 10 wt%). The dispersion was heated from 20 to 90 °C and kept at 90 °C for 50 minutes. The hot dispersion was homogenised in a high-pressure homogeniser (500 bar) and spray dried (GEA Niro Multi Stage Dryer). The spray dried powder was extracted with hexane as described below.

### Extraction

- Samples 2, 4 & 5: 250 gram lentil flour was dispersed in 400 gram n-hexane and stirred for 30 minutes using a magnetic stirrer. After stirring the flour particles were left to sediment. The sediment was collected and redispersed in 400 gram fresh hexane; the supernatant phase containing dissolved lipids was discarded. The extraction step was repeated 5 times. The extracted flour was air-dried to remove residual hexane.

### Whipping tests

Next, the treated lentil flour samples and the non-treated lentil sample were subjected to whipping tests using the following procedure:
- Samples 1, 2 and 4:each of the treated lentil flour samples and the non-treated lentil sample were mixed with Millipore water (w/w = 1:19) and whipped using the following procedure: 150 gram of the mixture was added to the mixing bowl of a Kenwood food mixer (Titanium Timer Chef KM030, Kenwood UK) equipped with a 5 wire whisk attachment and stirred at maximum speed for 10 minutes. The whipped composition was transferred to a 1 L polypropylene plastic beaker; the beaker was suitably graduated to enable direct reading of the foam volume.
- Samples 3 and 5: 150 gram of the heat-treated flour sample was added to the mixing bowl of the Kenwood mixer without further dilution and whipped using the procedure described above.

Overrun of the samples was calculated as follows: overrun (%) = 100 x (V_{foam} - V₀) / V₀, where V_{foam} is volume of whipped sample (read from the graduations on the beaker) and V₀ is initial sample volume before whipping. The results are shown in Table 2.

**Table 2**

| Sample | Overrun |
|---|---|
| 1 | 87% |
| 2 | 553% |
| 3 | 80% |
| 4 | 233% |
| 5 | 424% |

The lipid composition of samples 1 and 2 was analysed. The results of the analyses are shown in Table 3.

**Table 3**

| sample | total lipids ¹ wt% | phospholipids ² wt% | triglycerides (estimate) ³ wt% |
|---|---|---|---|
| 1 | 1,8 | 1,25 | ∼ 0,35 |
| 2 | 0.9 | 1,13 | ∼ 0 |

| | | | |
|---|---|---|---|
| ¹ Analysis method: ISO 1443. ² Analysis method: quantitative ³¹P-NMR spectroscopy. Analysis performed by Spectral Service AG (Germany). ³ Estimate based on assumption that non-phosphorous lipids are mainly composed of triglycerides and sterols and that sterol content is appr. 0.2 wt% (J. Sing and P.S. Basu, Non-nutritive bioactive compounds in pulses and their impact on human health: an overview, Food and Nutrition Sciences 3, 1664-1672, 2012). | | | |

### Albumin and starch content

The defatted lentil flour used in Example 1 had a dry matter content of 94 wt%. Dehulled lentil flour (cotelydon flour) has a total protein content of 29.13 wt%, globulins make up 51 wt% of the total protein content, albumins 16.8 wt% and glutelins 11.20 wt% (R. Gupta and S. Dhillon, Characterization of seed proteins of lentils (Lens culinaris M.), Ann. Biol. 9, 71-78 (1993)). The albumin content of Samples 1 to 5, calculated based on these data, was 0.23 wt%. The starch content of lentil flour is about 45 wt%, therefore the starch content of Samples 1 to 5 was 2.11 wt%.

### Example 2

A 5% slurry was made using hexane-extracted lentil flour (Sample 2 of Example 1) dispersed into Millipore water.

The slurry was heated to 90 °C in a water-bath and kept at that temperature for 20 minutes, using a low shear paddle to prevent sedimentation of the flour particles. Heating caused gelatinization of the lentil starch phase (gelatinization temperature ca. 72 °C). The slurry was cooled to 50 °C and whipped using the procedure described in Example 1.

A control sample containing 5% hexane-extracted lentil flour (Sample 2 of Example 1) was prepared in the same way, but no heating step was applied in this case. The control sample was whipped at 20 °C.

After whipping samples were stored in a fridge at 5 °C. Foam overrun and foam drainage were monitored during storage at 5 °C (foam drainage was calculated as: drainage (%) = 100 x Vₜ/V₀, where Vₜ = volume of liquid at bottom of plastic beaker and V₀ is initial sample volume before foaming). The results are depicted in Table 4.

**Table 4**

| Time (hrs) | overrun (%) | | drainage (%) | |
|---|---|---|---|---|
| | gelatinized | non-heated | gelatinized | non-heated |
| 0 | 533 | 567 | 0 | 0 |
| 0.25 | 533 | 567 | 0 | 53 |
| 0.5 | 527 | 547 | 7 | 66 |
| 1 | 520 | 493 | 20 | 80 |
| 2 | 507 | 447 | 33 | 87 |
| 3 | 500 | 433 | 33 | 93 |
| 24 | 400 | 67 | 60 | 97 |
| 48 | 200 | 7 | 67 | 97 |
| 72 | 67 | 7 | 67 | 97 |

The whipped sample produced with the gelatinized flour was found to have a substantially thicker, less fluid consistency than the non-heated flour.

The albumin content of the samples of Example 2 was 0.23 wt%. The starch content of the samples of Example 2 was 2.11 wt%. Both values were calculated as explained for Example 1.

### Example 3

The experiment described in Example 2 was repeated, except that this time the slurries contained 7.5 wt% lentil flour. Results are shown in Table 5.

**Table 5**

| Time (hrs) | overrun (%) | | drainage (%) | |
|---|---|---|---|---|
| | gelatinized | non-heated | gelatinized | non-heated |
| 0 | 500 | 700 | 0 | 0 |
| 0.25 | 500 | 667 | 0 | 20 |
| 0.5 | 500 | 667 | 0 | 40 |
| 1 | 487 | 633 | 0 | 60 |
| 2 | 487 | 600 | 0 | 67 |
| 3 | 487 | 600 | 0 | 73 |
| 24 | 473 | 600 | 20 | 87 |
| 48 | 460 | 567 | 27 | 87 |
| 120 | 333 | 33 | 27 | 93 |
| 168 | 200 | 7 | 27 | 93 |

Again, the whipped sample produced with the gelatinized flour was found to have a thicker, less fluid consistency than the non-heated flour.

The albumin content of the samples of Example 3 was 0.35 wt%. The starch content of the samples of Example 2 was 3.17 wt%. Both values were calculated as explained for Example 1.

### Example 4

Foaming properties of a fat-free chicken bouillon made with hexane extracted lentil flour (Sample 2 of Example 1) were compared to those of a bouillon containing ordinary lentil flour.

15 gram Chicken Bouillon Powder (Knorr®; composition: 15 g protein, 7 g carbohydrates and 3.9 g lipids per 100 gram) was mixed with 1 L boiling tap water. Lipids were separated from the bouillon by centrifugation using a Beckman Coulter Avanti J 262 XP centrifuge (10.000 x g, 45 minutes, temperature 40 °C). During centrifugation a layer of finely dispersed lipid material formed on top the samples; the top layer was discarded and the (defatted) bouillon was collected.

The bouillon was then heated in a water bath to 80 °C. Hexane defatted lentil flour (Sample 2 of Example 1) or native lentil flour (Sample 1 of Example 1) were mixed into the bouillon in concentration of 0.1 wt.% and 0.05 wt.%. The hot mixture was introduced into the mixing bowl of a Kenwood mixer and whipped using the procedure described in Example 1. Foam overrun was measured at different times after whipping. Results are depicted in Table 6.

**Table 6**

| Time (hrs) | Overrun (%) 0.1 % lentil flour | | Overrun (%) 0.05% lentil flour | |
|---|---|---|---|---|
| | hexane extracted | native | hexane extracted | native |
| 0 | 87 | 20 | 53 | 0 |
| 0.25 | 87 | 0 | 40 | 0 |
| 0.5 | 73 | 0 | 33 | 0 |
| 1 | 47 | 0 | 20 | 0 |
| 2 | 20 | 0 | 7 | 0 |
| 3 | 13 | 0 | 7 | 0 |

The albumin content of the samples of Example 4 comprising 0.1 wt% lentil flour was 0.0046 wt% and of the samples comprising 0.05 wt% lentil flour it was 0.0023 wt%. The starch content of the samples of Example 4 comprising 0.1 wt% lentil flour was 0.042 wt% and of the samples comprising 0.05 wt% lentil flour, it was 0.021 wt%. All values were calculated as explained for Example 1.

### Example 5

A foamable composition was made containing 10 wt% sucrose, 0.05 wt% lemon oil (flavouring) and 5 wt% hexane-extracted lentil flour (Sample 2 of Example 1). A similar composition was made containing 5% native lentil flour (Sample 1 of Example 1).

The formulations were whipped using the procedure described in Example 1. Overrun was measured at different times after foaming. Results are shown in Table 7.

**Table 7**

| Time (hrs) | Overrun (%) | |
|---|---|---|
| | hexane-extracted flour | native flour |
| 0 | 387 | 87 |
| 0.25 | 380 | 87 |
| 0.5 | 367 | 73 |
| 1 | 367 | 73 |
| 2 | 353 | 73 |
| 2.5 | 353 | 73 |

The albumin content of the samples of Example 5 was 0.23 wt%. The starch content of the samples of Example 5 was 2.11 wt%. Both values were calculated as explained for Example 1.

### Example 6

Foaming properties of hexane-extracted (Sample 2 of Example 1) and native lentil flour (Sample 1 of Example 1) were measured at different flour concentrations in a range from 0.25 to 7.5 wt%. Flours were mixed with Millipore water and whipped using the procedure described in Example 1. Foam overrun and foam drainage were measured at different times after foam preparation. Results are shown in Table 8.

**Table 8**

| concentration (wt %) | overrun (%) after t = 0 min | | drainage (%) after t = 0 min | |
|---|---|---|---|---|
| | hexane extracted | native | hexane extracted | native |
| 0.25 | 73 | 67 | 93 | 93 |
| 0.50 | 180 | 113 | 73 | 87 |
| 1.0 | 353 | 120 | 40 | 87 |
| 2.5 | 533 | 113 | 7 | 80 |
| 5.0 | 567 | 120 | 0 | 73 |
| 7.5 | 700 | 140 | 0 | 67 |

| | after t = 60 min | | after t = 60 min | |
|---|---|---|---|---|
| 0.25 | 53 | 60 | 93 | 97 |
| 0.50 | 160 | 100 | 93 | 93 |
| 1.0 | 340 | 100 | 87 | 93 |
| 2.5 | 526 | 107 | 87 | 87 |
| 5.0 | 493 | 113 | 80 | 87 |
| 7.5 | 633 | 113 | 60 | 87 |

| | after t = 120 min | | after t = 120 min | |
|---|---|---|---|---|
| 0.25 | 53 | 53 | 93 | 97 |
| 0.50 | 153 | 87 | 93 | 97 |
| 1.0 | 333 | 93 | 93 | 93 |
| 2.5 | 500 | 100 | 87 | 93 |
| 5.0 | 447 | 107 | 87 | 93 |
| 7.5 | 600 | 133 | 67 | 87 |

| | after t = 180 min | | after t = 180 min | |
|---|---|---|---|---|
| 0.25 | 53 | 53 | 93 | 97 |
| 0.50 | 127 | 80 | 93 | 97 |
| 1.0 | 320 | 80 | 93 | 97 |
| 2.5 | 467 | 93 | 93 | 93 |
| 5.0 | 433 | 100 | 93 | 93 |
| 7.5 | 600 | 133 | 73 | 87 |

## Claims

1. A foamable aqueous food product consisting of:
• 0.001-0.8 wt.% of lentil albumin;
• 0.01-5 wt.% of lentil starch;
• 0-0.02 wt.%, preferably 0-0.01 wt.% of triglycerides;
• 80-99 wt.% water; and
• 2-19 wt.% of other ingredients;
wherein the food product contains at least 30% by weight of dry matter of food ingredients selected from monosaccharides, disaccharides, oligosaccharides, non-lentil polysaccharides, non-lentil proteinaceous matter, minerals and combinations thereof.

2. Aqueous food product according to claim 1, wherein the aqueous composition contains less than 4%, preferably less than 2% triglycerides by weight of the lentil albumin.

3. Aqueous food product according to claim 1 or 2, wherein the aqueous composition contains 2-40%, preferably 4-35% of phospholipids by weight of the lentil albumin.

4. Aqueous food product according to any one of the preceding claims, wherein the composition contains lentil albumin and starch in a weight ratio that lies within the range of 1:30 to 1:1.

5. Aqueous food product according to any one of the preceding claims, wherein the other ingredients represent at least 50 wt.% of the dry matter that is contained in the aqueous composition.

6. Aqueous food product according to any one of the preceding claims, wherein the composition contains 0.1-2 wt.% of salt selected from NaCl, KCl and combinations thereof.

7. Aqueous food product according to claim 6, wherein the aqueous composition can be aerated to an overrun of at least 10%.

8. Aqueous food product according to claim 6 or 7, wherein the aqueous composition is a soup or a sauce.

9. Aqueous food product according to any one of claims 1-5, wherein the composition contains 1-20 wt.% of sugars selected from monosaccharides, disaccharides and combinations thereof.

10. Aqueous food product according to claim 9, wherein the aqueous composition can be aerated to an overrun of at least 50%.

11. Aqueous food product according to claim 9 or 10, wherein the aqueous composition is a topping, a mousse or a filling.

12. A process of preparing a foamable aqueous food product according to any one of the preceding claims, said process comprising combining a lentil derived component with one or more other ingredients representing at least 50 wt.% of the dry matter contained in the foamable composition, said lentil derived component consisting of:
• 3-20 wt.% lentil albumin;
• 30-70 wt.% lentil starch;
• 0-0.2 wt.% triglycerides; and
• 0-60 wt.% of other ingredients derived from lentil.

13. A dry composition that can be reconstituted with water to a foamable aqueous food product according to any one of claims 1-11 wherein the dry composition consists of:
• 0.1-4 wt.% of lentil albumin;
• 1-40 wt.% of lentil starch;
• 0-10 wt.% water; and
• 40-95 wt.% of other components;
wherein the dry composition contains less than 4%, preferably less than 2% and most preferably less than 1% triglycerides by weight of the lentil albumin.

14. Use of a lentil-derived component as a foaming agent in an aqueous food product, wherein the lentil derived component consists of:
• 3-20 wt.% lentil albumin;
• 30-70 wt.% lentil starch;
• 0-0.2 wt.% triglycerides; and
• 0-60 wt.% of other ingredients.

15. Use according to claim 14, wherein the lentil-derived component is defatted lentil flour.

## Patentansprüche

1. Schäumbares wässriges Nahrungsmittelprodukt, bestehend aus:
• 0,001 - 0,8 Gew.-% Linsenalbumin,
• 0,01 - 5 Gew.-% Linsenstärke,
• 0 - 0,02 Gew.-%, vorzugsweise 0 - 0,01 Gew.-% Triglyceriden,
• 80 - 99 Gew.-% Wasser und
• 2 - 19 Gew.-% von anderen Zutaten,
wobei das Nahrungsmittelprodukt mindestens 30 Gewichts-% Trockenmasse an Nahrungsmittelzutaten enthält, die aus Monosacchariden, Disacchariden, Oligosacchariden, Nicht-Linsen-Polysacchariden, Nicht-Linsen-Proteinmaterial, Mineralien und Kombinationen davon ausgewählt sind.

2. Wässriges Nahrungsmittelprodukt nach Anspruch 1, wobei die wässrige Zusammensetzung weniger als 4%, vorzugsweise weniger als 2% Triglyceride, bezogen auf das Gewicht des Linsenalbumins, enthält.

3. Wässriges Nahrungsmittelprodukt nach Anspruch 1 oder 2, wobei die wässrige Zusammensetzung 2 - 40%, vorzugsweise 4 - 35% Phospholipide, bezogen auf das Gewicht des Linsenalbumins, enthält.

4. Wässriges Nahrungsmittelprodukt nach irgendeinem der vorhergehenden Ansprüche, wobei die Zusammensetzung Linsenalbumin und -stärke in einem Gewichtsverhältnis enthält, das innerhalb des Bereichs von 1:30 bis 1:1 liegt.

5. Wässriges Nahrungsmittelprodukt nach irgendeinem der vorhergehenden Ansprüche, wobei die anderen Zutaten mindestens 50 Gew.-% der Trockenmasse repräsentieren, die in der wässrigen Zusammensetzung enthalten ist.

6. Wässriges Nahrungsmittelprodukt nach irgendeinem der vorhergehenden Ansprüche, wobei die Zusammensetzung 0,1 - 2 Gew.-% Salz enthält, ausgewählt aus NaCl, KCl und Kombinationen davon.

7. Wässriges Nahrungsmittelprodukt nach Anspruch 6, wobei die wässrige Zusammensetzung bis auf einen Überlauf von mindestens 10% belüftet werden kann.

8. Wässriges Nahrungsmittelprodukt nach Anspruch 6 oder 7, wobei die wässrige Zusammensetzung eine Suppe oder eine Soße darstellt.

9. Wässriges Nahrungsmittelprodukt nach irgendeinem der Ansprüche 1 - 5, wobei die Zusammensetzung 1 - 20 Gew.-% an Zuckern enthält, die aus Monosacchariden, Disacchariden und Kombinationen davon ausgewählt sind.

10. Wässriges Nahrungsmittelprodukt nach Anspruch 9, wobei die wässrige Zusammensetzung bis auf einen Überlauf von mindestens 50% belüftet werden kann.

11. Wässriges Nahrungsmittelprodukt nach Anspruch 9 oder 10, wobei die wässrige Zusammensetzung einen Belag, eine Mousse oder eine Füllung darstellt.

12. Verfahren zur Herstellung eines schäumbaren wässrigen Nahrungsmittelprodukts nach irgendeinem der vorhergehenden Ansprüche, wobei das Verfahren das Kombinieren einer von Linsen gewonnenen Komponente mit einer oder mehreren anderen Zutaten umfasst, die mindestens 50 Gew.-% der in der schäumbaren Zusammensetzung enthaltenen Trockenmasse darstellen, wobei die von Linsen gewonnene Komponente besteht aus:
• 3 - 20 Gew.-% Linsenalbumin,
• 30 - 70 Gew.-% Linsenstärke,
• 0 - 0,2 Gew.-% Triglyceriden und
• 0 - 60 Gew.-% von anderen von Linsen gewonnenen Zutaten.

13. Trockene Zusammensetzung, die mit Wasser zu einem schäumbaren wässrigen Lebensmittelprodukt nach irgendeinem der Ansprüche 1 - 11 rekonstituiert werden kann, wobei die trockene Zusammensetzung besteht aus:
• 0,1 - 4 Gew.-% Linsenalbumin,
• 1 - 40 Gew.-% Linsenstärke,
• 0 - 10 Gew.-% Wasser und
• 40 - 95 Gew.-% von anderen Komponenten,
wobei die trockene Zusammensetzung weniger als 4%, vorzugsweise weniger als 2% und höchst bevorzugt weniger als 1% Triglyceride, bezogen auf das Gewicht des Linsenalbumins, enthält.

14. Verwendung einer von Linsen gewonnenen Komponente als Schäumungsmittel in einem wässrigen Nahrungsmittelprodukt, wobei die von Linsen gewonnene Komponente besteht aus:
• 3 - 20 Gew.-% Linsenalbumin,
• 30 - 70 Gew.-% Linsenstärke,
• 0 - 0,2 Gew.-% Triglyceriden und
• 0 - 60 Gew.-% von anderen Zutaten.

15. Verwendung nach Anspruch 14, wobei die von Linsen gewonnene Komponente entfettetes Linsenmehl darstellt.

## Revendications

1. Produit alimentaire aqueux pouvant mousser consistant en :
• 0,001-0,8 % en masse d'albumine de lentille ;
• 0,01-5 % en masse d'amidon de lentille ;
• 0-0,02 % en masse, de préférence 0-0,01 % en masse de triglycérides ;
• 80-99 % en masse d'eau ; et
• 2-19 % en masse d'autres ingrédients ;
dans lequel le produit alimentaire contient au moins 30 % en masse de matière sèche d'ingrédients alimentaires choisis parmi des monosaccharides, disaccharides, oligosaccharides, polysaccharides non de lentille, matière protéinée non de lentille, minéraux et combinaisons de ceux-ci.

2. Produit alimentaire aqueux selon la revendication 1, dans lequel la composition aqueuse contient moins de 4 %, de préférence moins de 2 % de triglycérides en masse de l'albumine de lentille.

3. Produit alimentaire aqueux selon la revendication 1 ou 2, dans lequel la composition aqueuse contient 2-40 %, de préférence 4-35 % de phospholipides en masse de l'albumine de lentille.

4. Produit alimentaire aqueux selon l'une quelconque des revendications précédentes, dans lequel la composition contient de l'albumine de lentille et de l'amidon dans un rapport massique qui se trouve dans l'intervalle de 1:30 à 1:1.

5. Produit alimentaire aqueux selon l'une quelconque des revendications précédentes, dans lequel les autres ingrédients représentent au moins 50 % en masse de la matière sèche qui est contenue dans la composition aqueuse.

6. Produit alimentaire aqueux selon l'une quelconque des revendications précédentes, dans lequel la composition contient 0,1-2 % en masse de sel choisi parmi NaCl, KCI et des combinaisons de ceux-ci.

7. Produit alimentaire aqueux selon la revendication 6, dans lequel la composition aqueuse peut être aérée jusqu'à un dépassement d'au moins 10 %.

8. Produit alimentaire aqueux selon la revendication 6 ou 7, dans lequel la composition aqueuse est une soupe ou une sauce.

9. Produit alimentaire aqueux selon l'une quelconque des revendications 1-5, dans lequel la composition contient 1-20 % en masse de sucres choisis parmi des monosaccharides, disaccharides et combinaisons de ceux-ci.

10. Produit alimentaire aqueux selon la revendication 9, dans lequel la composition aqueuse peut être aérée jusqu'à un dépassement d'au moins 50 %.

11. Produit alimentaire aqueux selon la revendication 9 ou 10, dans lequel la composition aqueuse est un nappage, une mousse ou une farce.

12. Procédé de préparation d'un produit alimentaire aqueux pouvant mousser selon l'une quelconque des revendications précédentes, ledit procédé comprenant la combinaison d'un constituant dérivé de lentille avec un ou plusieurs autres ingrédients représentant au moins 50 % en masse de la matière sèche contenue dans la composition pouvant mousser, ledit constituant dérivé de lentille consistant en :
• 3-20 % en masse d'albumine de lentille ;
• 30-70 % en masse d'amidon de lentille ;
• 0-0,2 % en masse de triglycérides ; et
• 0-60 % en masse d'autres ingrédients dérivés de lentille.

13. Composition sèche qui peut être reconstituée avec de l'eau en un produit alimentaire aqueux pouvant mousser selon l'une quelconque des revendications 1-11, dans laquelle la composition sèche consiste en :
• 0,1-4 % en masse d'albumine de lentille;
• 1-40 % en masse d'amidon de lentille ;
• 0-10 % en masse d'eau ; et
• 40-95 % en masse d'autres constituants ;
dans laquelle la composition sèche contient moins de 4 %, de préférence moins de 2 % et encore mieux moins de 1 % de triglycérides en masse de l'albumine de lentille.

14. Utilisation d'un constituant dérivé de lentille comme un agent moussant dans un produit alimentaire aqueux, dans laquelle le constituant dérivé de lentille consiste en :
• 3-20 % en masse d'albumine de lentille ;
• 30-70 % en masse d'amidon de lentille ;
• 0-0,2 % en masse de triglycérides ; et
• 0-60 % en masse d'autres ingrédients.

15. Utilisation selon la revendication 14, dans laquelle le constituant dérivé de lentille est de la farine de lentille dégraissée.
